# EUROPEAN PATENT APPLICATION

(11) **EP 3 553 356 A1**
(43) Date of publication of application: **16.10.2019**
(21) Application number: 18166953.2
(22) Date of filing: 12.04.2018
(51) Int. Cl.: F16K 31/06

(54) **ELECTROMAGNETIC FLUID VALVE**

(71) Applicant: WABCO Europe BVBA, 1170 Brussels (BE)
(72) Inventor: Bialon, Rafal, 55-200 Olawa (PL)
(74) Representative: Koschnitzki, Thomas

(57) **Abstract**

The invention relates to an electromagnetic fluid valve (1), in particular for pneumatic applications, wherein said fluid valve (1) comprises:
a magnetic yoke (3, 5, 6) and a current coil (4) provided in said magnetic yoke (3, 5, 6),
a displaceable diaphragm (8),
fluid connections (20a, 20b, 20c), the interlinkage of which is switchable depending on an electric current flowing in said current coil (4).

In order to allow switching of high fluid currents with little effort,
said diaphragm (8) comprises a magnetic metal plate (10) and a vulcanized rubber material (11), and
said diaphragm (8) is displaceable into an actuated position of said fluid valve (1) by a magnetic field induced by said electric current fed into said current coil (4).

## Description

The invention relates to an electromagnetic fluid valve. In particular, the fluid valve may be a pneumatic valve, in particular, a 3/2-valve. It is suitable for application, in particular, in a pneumatic system of a commercial vehicle.

In solenoid valves the efficiency of the magnetic circuits is generally limited. In particular, the small diameters of the air gaps and the small diameters of the adjustable valve armature and its guide lead to limits of efficiency. The construction of larger valves typically requires larger diameters and leads to markedly higher cost, in particular, also of the magnetic parts.

The document DE 195 00 768 A1 describes a fluid actuated servo drive whereby in a housing a diaphragm is arranged which separates a working chamber and co-acts with a power transmission element, e.g. a rod which is guided in a housing and axially displaceable. The diaphragm is formed by a metal elastomer compound corpus which is preferably inseparably connected to the rod.

The citation DE 2011 815 651 A1 describes a valve having a fluidic valve part and an actor. The fluidic valve part comprises a housing and a valve corpus movable therein. As an actor, in particular, an electromagnet is provided which serves to adjust the valve corpus. Hereby, a seal element in the form of a diaphragm is introduced by means of which the actor is hydraulically separated from valve part. The diaphragm may be, in particular, an elastomer diaphragm with an inserted part of higher rigidity, via which the actor actuates the valve corpus. Thereby, the force of an actuator element of the actor can be transferred to the control piston mostly un-attenuated. The insert part may be, in particular, a galvanized steel insert.

Such valves, too, require s large number of components at limited volumes.

Problem of the invention is to create a fluid valve which can be made with little effort and allows the switching of high fluid currents.

This problem is solved by a fluid valve according to claim 1. The sub-claims describe preferred further developments.

The fluid valve may be, in particular, a pneumatic valve, in particular, a 3/2-valve.

Thus, an adjustable diaphragm is provided comprising a magnetic metal plate, in particular, a steel plate, galvanized into a rubber material.

Advantageously, the magnetic metal plate is covered by the rubber material upwards, downwards and on the sides respectively. The rubber material of the diaphragm may serve, in particular, also for creating a valve seat when the diaphragm, depending on the switching position, comes into contact with one of two valve seats. Thus, secure positions are attained in that the diaphragm presses against the valve seats with its rubber material reinforced and hardened by the metal plate.

Preferably, the fluid valve is spring biased into a position whereby, advantageously, in addition to the elasticity of the diaphragm, a steel spring, e.g. a helical spring, is provided pressing the diaphragm against a valve seat. Preferably, the valve seats are provided in a central location or, respectively, in the symmetric axis of the valve so that the diaphragm may be affixed to the housing of the valve at its outer edges and close one or the other respectively of the two valve seats by means of its central region.

By using a diaphragm comprising rubber material, already, several advantages can be attained. Thus, the diaphragm can be adjusted by larger strokes or throws so that higher volume currents or flows can be formed. The expenditure and complexity of the apparatus can be kept low. Thus, the current coil can be housed in a yoke, e.g. with an outer yoke and an inner yoke, which are closed in a lower region via a magnetic bottom. Thus, the diaphragm at the other end of the yoke may serve to close the yoke when a current is applied whereby the diaphragm, when a current is applied, is lifted off its basic valve seat and e.g. closes a valve seat at the yoke. The magnetic metal plate enables a magnetic flow from the inner yoke radially outwards towards the outer yoke.

Advantageously, a passage is formed in the diaphragm through which the fluid connections may be in contact with each other. Thus, it is possible, for example, to have the diaphragm always close one valve seat respectively and the other valve seat may form a fluid connection or interlinkage with a further fluid connection, e.g. formed on the edge of the yoke.

The entire design of the fluid valve is quite simple. It may be formed essentially by the yoke and the current coil as well as the diaphragm suspended in the yoke or, respectively, the housing. Advantageously, from the other end, a cover, in particular, made from non-magnetic material, is attached which may also serve e.g. to form a basic valve seat.

By using vulcanized rubber for the material of the diaphragm the steel plate can be securely embedded and also an increased sealing effect is attained on the valve seats as well as a high stroke or throw of the diaphragm with low material fatigue.

Advantageously, the design made of the yoke and the current coil can be fixated, in particular, by being moulded into plastics since this does not influence the magnetic properties.

Furthermore, a peak and hold circuit, i.e. a non-constant current drive, may be used additionally for controlling the solenoid. This is particularly suitable here for attaining a quick actuation with small packaging and low energy consumption.

The invention is hereinafter described in detail with reference to the appended drawings, in which:

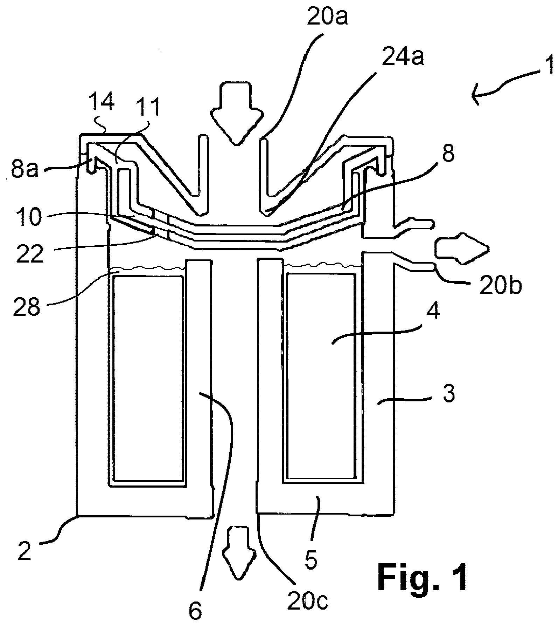

- Fig. 1: a 3/2 valve as electro-pneumatic valve according to one embodiment of the invention;
- Fig. 2: the valve in the non-actuated basic position;
- Fig. 3: the valve in the actuated position with current applied to the solenoid.

The figures show a pneumatic 3/2 valve 1 the housing 2 of which is made from ferromagnetic metal, in particular, ferromagnetic steel, and forms an outer yoke 3, preferably, as a cylindrical sleeve or cylindrical tube, in which a solenoid 4, i.e. a current coil, is housed. The housing 2 further comprises a cylinder bottom 5 and an inner yoke 6.

Upwards the magnetic yoke arrangement of the housing 2 is open by virtue of the outer yoke 3, the bottom 5 and the inner yoke 6. At this open end of the yoke arrangement an adjustable diaphragm 8 is provided which serves for forming the different switching positions. The diaphragm 8 comprises a steel plate 10 made of ferromagnetic steel which is galvanized into the rubber material 11. The diaphragm 8 is affixed to the housing 2 via rubber junctions 8a so that the diaphragm 8 is, in reality, made up of rubber with a steel inlay. Advantageously, a lid 14 made of non-magnetic material is placed onto the housing 2 from the top so that the diaphragm 8 is clamped in between the lid 14 and the housing 2.

The 3/2 valve 1 shown in the figures a comprises three connections a first connection 20a - e.g. an inlet - being provided in the lid 14, a second connection 20b - e.g. an outlet - on the side of the housing 2, and a third connection 20c - e.g. a vent - at a central location on the housing 2. Hereby, as can be seen in the embodiment, the third connection 20c may be a connection of the free space created by the yoke 6 towards the outside.

In the diaphragm 8 a passage 22 is created extending both through the rubber 11 and through the steel plate 10. The diaphragm 8 closes, depending on its position, a first valve seat 24a on the inside of the lid 14 or a second valve seat 24b on the inner yoke 6.

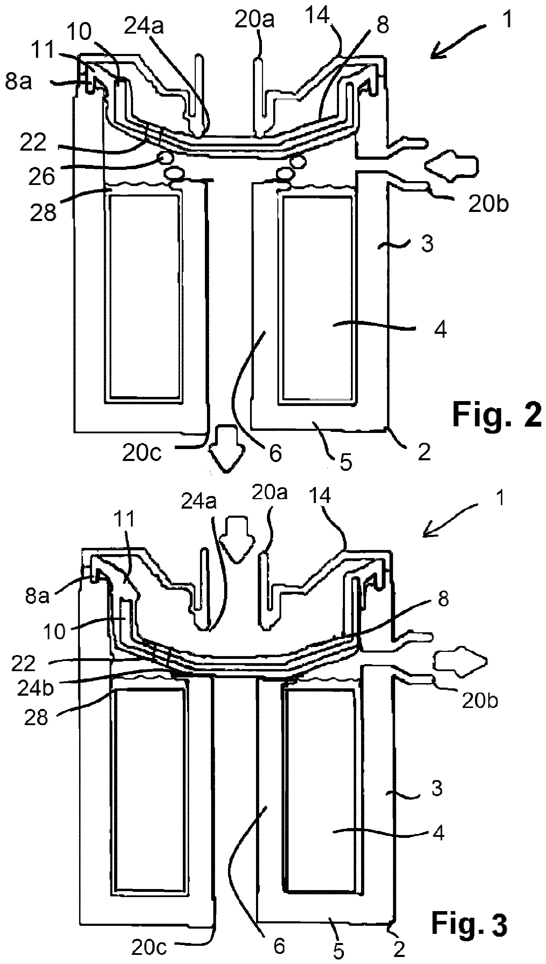

In the non-actuated basic position in Fig. 2 the diaphragm 8 is biased by a spring 26 against the first valve seat 24a so that the first connection 20a is closed. Hereby, the rubber material 11 of the diaphragm 8 allows a tight contact with the first valve seat 24a. The two other connections 20b, 20c are connected with each other.

In applying a current to the solenoid 4 it creates a magnetic field extending through the outer yoke 3, the lower bottom 5 and the inner yoke 6. The steel plate 10 of the diaphragm 8 is pulled tight at the upper end - as seen in Fig. 3 - of the solenoid 4 and the yoke arrangement so that the diaphragm 8 is moved to the second, actuated position, as shown in Fig. 3, where its rubber material 11 is lifted off of the first valve seat 24a and closes the second valve seat 24b. Thus, the magnetic flow runs from the inner yoke 6 via the steel plate 10 radially towards the outside to the outer yoke 3. Thus, in this second, actuated valve position the second valve seat 24 is closed so that the third connection 20c is not connected to the other connections. The first connection 20a is connected via the passage 22 in the diaphragm 8 to a space below the diaphragm 8 which is connected to the second connection 20b. Thus, hereby, the passage of fluid through the passage 22 is enabled.

Advantageously, the coil 4 and the outer yoke 3 including the bottom 5 and the inner yoke 6 are moulded into plastic material 28.

For manufacturing the valve 1, advantageously, first the current coil (solenoid) 4 is placed inside the yoke, i.e. into the housing 2, and pressure-cast or moulded by means of the plastics material 28. Thereafter, the diaphragm 8 and then the lid 14 are inserted.

The electrical activation of the solenoid 4 may be made, in particular, by means of a peak and hold circuit where the amount of current is reduced during actuation.

### List of reference numerals (part of the description)

- 1: pneumatic 3/2-valve
- 2: housing
- 3: outer yoke
- 4: solenoid, current coil
- 5: cylinder bottom
- 6: inner yoke

- 8: diaphragm
- 8a: rubber junction

- 10: steel plate
- 11: vulcanized rubber of the diaphragm 8
- 14: lid

- 20a: first connection, inlet
- 20b: second connection, outlet
- 20c: third connection, vent
- 22: passage in the diaphragm 8
- 24a: first valve seat
- 24b: second valve seat
- 24c: third valve seat
- 26: spring
- 28: plastics material

## Claims

1. Electromagnetic fluid valve (1), in particular for pneumatic applications, wherein said fluid valve (1) comprises:
a magnetic yoke (3, 5, 6) and a current coil (4) provided in said magnetic yoke (3, 5, 6),
a displaceable diaphragm (8),
fluid connections (20a, 20b, 20c), the interlinkage of which is switchable depending on an electric current flowing in said current coil (4),
**characterized in that**
said diaphragm (8) comprises a magnetic metal plate (10) and a vulcanized rubber material (11), and
said diaphragm (8) is displaceable into an actuated position of said fluid valve (1) by a magnetic field induced by said electric current fed into said current coil (4).

2. Fluid valve (1) according to claim 1,
**characterized in that** said diaphragm (8) is mounted with its rubber material (11) in rubber junctions (8a) at a casing (2), e. g. an outer yoke (3) of said casing (2).

3. Fluid valve (1) according to claim 2,
**characterized in that** said outer yoke (3) forms said casing (2) of said fluid valve (1) and said rubber junctions (8a) being part of said diaphragm (8) being directly mounted at said casing (2).

4. Fluid valve (1) according to one of the preceding claims,
**characterized in that** said magnetic metal plate (10) provided in said diaphragm (8) is capable of closing a magnetic flux of said magnetic field, in particular in a radial direction.

5. Fluid valve (1) according to one of the preceding claims,
**characterized in that** said diaphragm (8) is displaceable between two positions, wherein said diaphragm (8) closes a valve seat (24a, 24b) and leaves another one open in each of its both positions, respectively, wherein said diaphragm (8) contacts with its rubber material (11) the closed valve seat (24a, 24b).

6. Fluid valve (1) according to claim 4,
**characterized in that** said diaphragm (8) is secured in axial direction by a lid (14), wherein a first valve seat (24a) is formed at said lid (14) and a second valve seat (24b) is formed at said yoke (6).

7. Fluid valve (1) according to one of the preceding claims,
**characterized in that** said diaphragm (8) is biased by a spring (26) in a basic position, wherein said diaphragm (8) is actuatable by feeding said current coil (4) with a current, against a spring action of said spring (26).

8. Fluid valve (1) according to one of the preceding claims, **characterized in that** said metal plate (10) is completely surrounded by said rubber material (11) in said diaphragm (8).

9. Fluid valve (1) according to one of the preceding claims,
**characterized in that** a passage (22) is provided in said diaphragm (8), wherein an upper space above said diaphragm (8) is connectable with a lower space below said diaphragm (8).

10. Fluid valve (1) according to one of the preceding claims,
**characterized in that** it is a 3/2-valve, preferably a pneumatic 3/2-valve.

11. Fluid valve (1) according to one of the preceding claims,
**characterized in that** said current coil (4) in said yoke (3, 6) are moulded in plastic material (28).

12. Fluid valve (1) according to one of the preceding claims,
**characterized in that** a peak-and-hold circuit is provided for controlling said current coil (4).
